# FASCICULE DE BREVET EUROPEEN

(11) **EP 0 967 267 B1**
(45) Date de publication et mention de la délivrance du brevet: **28.01.2004**
(21) Numéro de dépôt: 99401477.7
(22) Date de dépôt: 16.06.1999
(51) Int. Cl.: C12G 1/04, C12H 1/02, C12C 5/02

(54) **Poudre comprenant un additif alimentaire et procédé de dispersion d'un additif oenologique utilisant ladite poudre**
Nahrungsmittelzusatz enthaltende Pulver und Dispersionsverfahren eines önologisches Zusatzes bei Verwendung dieses Pulvers
Powder comprising a food additive and dispersing procedure of an oenological additive using the same powder

(30) Priorité: 18.06.1998 FR 9807713
(43) Date de publication de la demande: 29.12.1999
(73) Titulaire: Oenologie A. Immele (S.A.), 68250 Westhalten (FR)
(72) Inventeur: Immele, Arnaud, 68250 Westhalten (FR)
(74) Mandataire: Breese, Pierre

(56) Documents cités:
- EP-A- 0 019 675
- EP-A- 0 190 689
- EP-A- 0 357 506
- FR-A- 2 746 812

## Description

La présente invention a pour objet une poudre comprenant un additif alimentaire associé à un excipient effervescent ainsi qu'un procédé utilisant ladite poudre pour la dispersion dudit additif dans un liquide utile dans l'industrie alimentaire et tout particulièrement dans du vin, du cidre , de la bière ou du vinaigre.

La dispersion d'additifs alimentaires et notamment oenologiques dans un liquide et particulièrement dans le vin est un problème récurrent dans le domaine de l'oenologie.

On connaît dans l'art antérieur une première solution au problème de la dispersion d'un additif alimentaire dans un liquide, consistant à préparer une solution aqueuse dudit additif, à verser cette solution dans le liquide, puis à homogénéiser l'ensemble par un brassage mécanique.

Une seconde solution, décrite dans la demande de brevet français No.2 746 812, consiste à utiliser des comprimés comprenant un additif alimentaire, et plus particulièrement oenologique, à disperser associé à un excipient effervescent. En général, ce type de comprimé est jeté dans une cuve contenant le liquide, atteint le fond, initie sa dissolution et séjourne au fond de la cuve quasiment jusqu'à la fin de sa dissolution. Un brassage final est nécessaire afin d'assurer l'homogénéisation de l'additif dans le liquide. Cependant, lorsque l'additif présente une forte densité, comme c'est le cas pour le SO2, il retombe rapidement dans le fond de la cuve. Le document EP-A-0 190 689 décrit une poudre constituée d'un additif alimentaire et d'un excipient effervescent.

Les moyens de brassage mécanique décrits dans l'art antérieur restent relativement complexes et coûteux à mettre en oeuvre à grande échelle. En conséquence, les solutions présentées dans l'art antérieur présentent l'inconvénient de n'être applicables qu'à de petites exploitations et sur un mode artisanal.

En outre, il est utile et avantageux, lors d'une opération de traitement d'un liquide alimentaire et notamment du vin, de pouvoir disperser un additif alimentaire et notamment oenologique non pas dans la totalité du volume de liquide mais dans une région bien définie dudit liquide. C'est le cas lorsque l'on désire lutter contre l'oxydation en surface des vins à l'aide d'un additif alimentaire doté de propriétés antioxydantes. Dans cette opération, l'additif alimentaire ajouté doit être dispersé dans le tiers supérieur de la cuve contenant le liquide alimentaire. Ce type de dispersion n'est pas réalisable avec les procédés connus dans l'art antérieur à moins d'utiliser un appareillage très spécifique et coûteux.

Les travaux menés par l'Inventeur ont permis de montrer qu'il était possible de limiter la dispersion d'un additif alimentaire à la partie haute ou basse de la cuve contenant un liquide en introduisant ledit additif sous la forme d'une poudre de particules comprenant en plus de l'additif un excipient effervescent. Au sens de la présente invention on entend par particules des agrégats polyhèdriques d'additif alimentaire et d'excipient effervescent de dimensions comprises entre 0,2 et 5 mm.

Ces travaux ont ainsi permis la modélisation et le contrôle de certains paramètres et notamment le contrôle du rapport Surface/Volume (S/V) des particules permet de limiter la dispersion de l'additif alimentaire.

En effet, les particules, après avoir été dispersées à la surface du liquide, sont dans un premier temps entraînées vers le bas du récipient par la pesanteur. Dans un deuxième temps, les bulles de CO₂ s'échappent de l'excipient effervescent et entraînent les particules vers la surface du liquide. La maîtrise de ces deux forces opposées permet de créer un mouvement essentiellement vertical des particules dans le liquide. Ce mouvement s'accompagne de la dissolution et de la répartition de l'additif alimentaire dans le liquide.

De manière générale, et pour une poudre de densité donnée, un rapport S/V proche de 12 entraînera une dispersion de l'additif alimentaire dans la partie supérieure du liquide. Inversement, un rapport S/V proche de 1 engendrera une dispersion de l'additif alimentaire dans la partie inférieure du liquide.

La présente invention a donc pour objet une poudre constituée de particules formées d'un additif alimentaire et plus particulièrement oenologique et d'un excipient effervescent, d'une taille comprise entre 0,2 et 5 mm, et dont le rapport surface/volume est compris entre 1 et 12.

Avantageusement la poudre de l'invention comprend encore un agent dispersant. Celui-ci par améliore la dispersion des particules formant la poudre par son action sur leur tension de surface. Les agents dispersant pouvant entrer dans la composition de la poudre de l'invention sont choisis parmi les poly-vinyl-pyrrolidones, appelées ci-après PVPP, ou la bentonite.

De manière avantageuse, les particules constituant la poudre de l'invention peuvent prendre une forme concave. Cette caractéristique présente l'avantage de permettre le déplacement horizontal des particules et d'optimiser l'homogénéité de la dispersion de l'additif alimentaire.

Avantageusement, les particules formant le produit de l'invention présentent une densité comprise entre 1,7 et 2, l'excipient effervescent dégageant entre 14 et 18 % en poids de la particule en CO₂.

La poudre de l'invention est obtenue en mélangeant à l'additif alimentaire, 40 à 60 % de son poids d'excipient effervescent. Les particules sont formées à l'aide d'une granuleuse sèche ou humide.

Les additifs alimentaires et notamment oenologiques pouvant entrer dans la composition du produit de l'invention sont choisis parmi les produits autorisés par la législation répertoriés dans le Codex Oenologique. Parmi ces produits, on peut citer le SO₂, la vitamine B₁, l'acide citrique, l'acide ascorbique, l'acide tartrique, des enzymes, le sorbate de potassium, l'acide métatartrique, les tanins , les PVPP, les charbons, les phosphates diammoniques, la caséine, les écorces de levures.

Parmi les excipients dotés de propriétés effervescentes pouvant entrer dans la composition du produit de l'invention, on peut citer le métabisulfite de potassium, le bicarbonate de potassium, et le carbonate de chaux, utilisables seuls ou en combinaison.

Dans un mode de réalisation particulier de la présente invention, le rapport S/V des particules de la poudre de l'invention est compris entre 8 et 12 de manière à localiser l'additif alimentaire dans la partie supérieure du liquide.

Une telle forme de réalisation est particulièrement avantageuse lorsque l'additif alimentaire est plus dense que le liquide dans lequel il est dispersé. Ce cas de figure se présente souvent dans le domaine de l'oenologie. En effet, il peut se révéler particulièrement utile de disperser un additif oenologique dans la partie supérieure du liquide oenologique en vue de réaliser un traitement contre l'oxydation du vin en surface.

Or, la poudre de l'invention permet, de manière avantageuse, de disperser dans la partie supérieure d'un liquide un additif alimentaire plus dense que le liquide de manière homogène et durable.

Dans un autre mode de réalisation de la présente invention, le rapport S/V des particules de la poudre de l'invention est compris entre 1 et 2 de manière à disperser l'additif alimentaire dans la partie inférieure du liquide.

Un tel mode de réalisation est particulièrement utile lorsque l'additif alimentaire est moins dense que le liquide, mais aussi lorsqu'il est important d'obtenir une dispersion précise et maîtrisée de l'additif alimentaire dans la partie basse du liquide.

Enfin, dans un dernier mode de réalisation de la présente invention, le rapport S/V des particules de la poudre de l'invention est compris entre 2 et 5. Cette caractéristique permet d'obtenir une dispersion de l'additif alimentaire dans la totalité du volume du liquide.

La poudre décrite dans ce dernier mode de réalisation de la présente invention permet la dispersion d'un additif alimentaire dans un liquide et ce, quelle que soit la densité de l'additif utilisé.

La présente invention concerne encore un procédé d'apport d'additifs alimentaire du type comprenant l'introduction dans un liquide et notamment dans du vin, d'un additif alimentaire associé à un excipient effervescent, caractérisé en ce que l'on introduit dans ledit liquide une poudre selon l'invention.

En fonction du type de dispersion souhaité, l'une des trois poudres de la présente invention est sélectivement introduite dans le liquide. Ainsi, le procédé d'apport d'additifs alimentaire de l'invention visant à disperser ledit additif dans la partie supérieure d'une cuve comprendra l'utilisation d'une poudre dont les particules présentent un rapport S/V compris entre 8 et 12. Respectivement, le procédé visant à disperser ledit additif dans la partie inférieure d'une cuve comprendra l'utilisation d'une poudre dont les particules présentent un rapport S/V compris entre 1 et 2.

La poudre de l'invention est dosée volumétriquement avec un verre mesureur gradué en masse de matière active. Une fois le volume de poudre à ajouter au liquide défini, la poudre est versée par le haut du récipient.

Pour des opérations répétitives sur de nombreux récipients, comme par exemple le sulfitage de barriques de 225 litres, l'utilisation d'un godet de 25 ml permet d'ajouter rapidement la dose adéquate de poudre. Contrairement aux procédés connus, un brassage final n'est pas nécessaire et l'opération de sulfitage est réalisée en 5 à 20 fois moins de temps.

La dispersion souhaitée est obtenue après environ 60 minutes

D'autres caractéristiques et avantages de la présente invention apparaîtront dans les exemples qui suivent qui décrivent différents modes d'obtention et d'utilisation des poudres de l'invention.

### I. Préparation d'une poudre selon l'invention utile pour la dispersion de SO₂.

Un procédé de préparation par granulation humide d'une poudre selon l'invention permettant la dispersion du SO₂ comprend les étapes suivantes :
- la préparation d'un mélange de métabisulfite de potassium et de dicarbonate de potassium dans des proportions de 1 pour 1,
- l'humidification sous une forte agitation et malaxage, jusqu'à l'obtention d'une poudre formée de petits grains,
- la calibration de la poudre par tamisage pour standardiser la taille des particules. Il est possible par exemple d'obtenir des tailles de particules calibrées entre 1,2 et 1,8 mm afin d'obtenir une dispersion homogène de SO2.
- l'addition éventuelle d'un agent dispersant tel que la bentonite ou le PVPP

### II. Ajout homogène de SO₂.

### 1. Dans une cuve dont la hauteur est inférieure à 1500 mm.

Ce cas concerne en oenologie les barriques de 200 à 250 litres. Une dispersion homogène de SO2 est obtenue en 30 minutes par ajout d'une poudre de l'invention dont les particules de forme polyédrique passent dans une maille de 1,5 mm x 1,5 mm et sont de taille supérieure à 0,8 mm dans une des dimensions du polyèdre. Le même résultat est obtenu avec des particules sphériques de 1,5 mm de diamètre. Ces deux types de particule ont un rapport S/V proche de 4.

### 2. Dans une cuve dont la hauteur est supérieure à 1500 mm.

Pour obtenir une dispersion homogène de SO2 dans ce type de cuve, la poudre utilisée doit être composée de particules dont le rapport S/V est proche de 2,4. C'est le cas par exemple de billes de 2,5 mm de diamètre.

### III. Ajout localisé de SO₂.

### 1. Ajout de SO2 dans la partie supérieure d'un récipient.

La dispersion de SO₂ dans la partie supérieure d'un récipient et notamment à proximité de la surface, est obtenue par utilisation d'une poudre dont les particules ont un rapport S/V d'environ 11. C'est notamment le cas de billes de 0,5 mm de diamètre.

Il faut remarquer qu'une telle poudre permet de localiser dans la parte supérieure du récipient un produit de haute densité comme le SO2. En effet, dans une utilisation classique, le SO₂ a tendance à se localiser dans le fond du récipient où il est introduit.

### 2. Dispersion de SO₂ dans la partie inférieure d'un récipient.

Une dispersion de SO2 dans la partie inférieure d'un récipient est obtenue par utilisation d'une poudre dont les particules ont un rapport S/V de 1,2, soit des particules sphériques de 5 mm de diamètre.

La localisation du SO₂ dans le fond du récipient est un phénomène bien connu de la technique traditionnelle du sulfitage. Elle est en général obtenue à l'aide d'une solution liquide de SO₂ ou de comprimés effervescents de taille très supérieure à 5 mm. Ces techniques sont cependant peu précises et difficilement maîtrisables. Ces inconvénients sont absents lorsqu'on utilise les poudres de l'invention.

## Revendications

1. Une poudre constituée de particules formées d'un additif alimentaire et d'un excipient effervescent, **caractérisée en ce que** lesdites particules ont une taille comprise entre 0,2 et 5 mm, un rapport surface/volume compris entre 1 et 12, une forme concave, et une densité comprise entre 1,7 et 2.

2. Poudre selon la revendication 1, **caractérisée en ce qu'**elle comprend un agent dispersant choisis parmi les poly-vinyl-pyrrolidones et la bentonite.

3. Poudre selon l'une des revendications 1 à 2, **caractérisée en ce que** l'excipient effervescent représente 50% du poids de l'additif alimentaire et dégage entre 14 et 18 % en poids de la particule en CO₂.

4. Poudre selon l'une des revendications 1 à 3, **caractérisée en ce que** l'additif alimentaire est choisi parmi le SO₂, la vitamine B₁, l'acide citrique, l'acide ascorbique, l'acide tartrique, des enzymes, le sorbate de potassium, l'acide métatartrique, les tanins, les poly-vinyl-pyrrolidones, les charbons, les phosphates diammoniques, la caséine, les écorces de levures.

5. Poudre selon l'une des revendications 1 à 4, **caractérisée en ce que** le rapport S/V des particules est compris entre 8 et 12.

6. Poudre selon l'une des revendications 1 à 4, **caractérisée en ce que** le rapport S/V des particules est compris entre 1 et 2.

7. Poudre selon l'une des revendications 1 à 4, **caractérisée en ce que** le rapport S/V des particules est compris entre 2 et 5.

8. Procédé d'apport d'additif alimentaire du type comprenant l'introduction dans un liquide et notamment dans du vin, dudit additif alimentaire associé à un excipient effervescent, **caractérisé en ce que** l'on introduit dans ledit liquide une poudre selon les revendications 1 à 7.

9. Procédé d'apport d'additif alimantaire dans la partie supérieure d'un liquide et notamment dans du vin, **caractérisé en ce que** l'on introduit dans ledit liquide une poudre selon la revendication 5.

10. Procédé d'apport d'additif alimentaire dans la partie inférieure d'un liquide et notamment dans du vin, **caractérisé en ce que** l'on introduit dans ledit liquide une poudre selon la revendication 6.

11. Procédé d'apport d'additif alimentaire dans la totalité du volume d'un liquide et notamment dans du vin, **caractérisé en ce que** l'on introduit dans ledit liquide une poudre selon la revendication 7.

## Patentansprüche

1. Pulver, bestehend aus Partikeln, gebildet aus einem Nahrungsmittelzusatzstoff und einem schäumenden Hilfsstoff, **dadurch gekennzeichnet, dass** die besagten Partikel eine Grösse von 0,2 bis 5 mm, ein Verhältnis Oberfläche/Volumen von 1 bis 12, eine konkave Form und eine Dichte von 1,7 bis 2 haben.

2. Pulver nach Anspruch 1, **dadurch gekennzeichnet, dass** es ein Dispersionsmittel umfasst, das aus den Polyvinylpyrrolidonen und dem Bentonit ausgewählt wurde.

3. Pulver nach einem der Ansprüche 1 bis 2, **dadurch gekennzeichnet, dass** der schäumende Hilfsstoff 50 % des Gewichts des Nahrungsmittelzusatzstoffes darstellt und 14 bis 18 Massenanteile des Partikels als CO₂ freisetzt.

4. Pulver nach einem der Ansprüche 1 bis 3, **dadurch gekennzeichnet, dass** der Nahrungsmittelzusatzstoff aus SO₂, dem Vitamin B₁, der Citronensäure, der Ascorbinsäure, der Weinsäure, Enzymen, dem Kaliumsorbat, der Metaweinsäure, den Tanninen, den Polyvinylpyrrolidonen, den Kohlen, den Diammoniumphosphaten, dem Kasein, den Heferinden ausgewählt ist.

5. Pulver nach einem der Ansprüche 1 bis 4, **dadurch gekennzeichnet, dass** das Verhältnis Oberfläche/Volumen der Partikel 8 bis 12 ist.

6. Pulver nach einem der Ansprüche 1 bis 4, **dadurch gekennzeichnet, dass** das Verhältnis Oberfläche/Volumen der Partikel 1 bis 2 ist.

7. Pulver nach einem der Ansprüche 1 bis 4, **dadurch gekennzeichnet, dass** das Verhältnis Oberfläche/Volumen der Partikel 2 bis 5 ist.

8. Verfahren zur Zufuhr des Nahrungsmittelzusatzstoffes des Typs, die Zuführung in eine Flüssigkeit und insbesondere in Wein des besagten Nahrungsmittelzusatzstoffes in Verbindung mit einem schäumenden Hilfsstoff umfassend, **dadurch gekennzeichnet, dass** der besagten Flüssigkeit ein Pulver nach den Ansprüchen 1 bis 7 zugesetzt wird.

9. Verfahren zur Zufuhr des Nahrungsmittelzusatzstoffes in den oberen Teil einer Flüssigkeit und insbesondere in Wein, **dadurch gekennzeichnet, dass** der besagten Flüssigkeit ein Pulver nach Anspruch 5 zugesetzt wird.

10. Verfahren zur Zufuhr eines Nahrungsmittelzusatzstoffes in den unteren Teil einer Flüssigkeit und insbesondere in Wein, **dadurch gekennzeichnet, dass** der besagten Flüssigkeit ein Pulver nach Anspruch 6 zugesetzt wird.

11. Verfahren zur Zufuhr eines Nahrungsmittelzusatzstoffes in das gesamte Volumen einer Flüssigkeit und insbesondere in Wein, **dadurch gekennzeichnet, dass** der besagten Flüssigkeit ein Pulver nach Anspruch 7 zugesetzt wird.

## Claims

1. A powder made up of particles formed of a food additive and an effervescent excipient, **characterized in that** said particles have a size of between 0.2 and 5 mm, a surface/volume ratio of between 1 and 12, a concave shape, and a density of between 1.7 and 2.

2. Powder according to claim 1, **characterized in that** it contains a dispersing agent chosen from among poly-vinyl-pyrrolidones and bentonite.

3. Powder according to either of claims 1 and 2, **characterized in that** the effervescent excipient represents 50 % of the weight of the food additive and releases between 14 and 18 % by weight of the particle in CO₂.

4. Powder according to any of claims 1 to 3, **characterized in that** the food additive is chosen from among SO₂, vitamin B₁, citric acid, ascorbic acid, tartaric acid, enzymes, potassium sorbate, metatartaric acid, tannins, poly-vinyl-pyrrolidones, charcoals, diammonium phosphates, casein, yeast hull.

5. Powder according to any of claims 1 to 4, **characterized in that** the S/V ratio of the particles lies between 8 and 12.

6. Powder according to any of claims 1 to 4, **characterized in that** the S/V ratio of the particles lies between 1 and 2.

7. Powder according to any of claims 1 to 4 **characterized in that** the S/V ratio of the particles lies between 2 and 5.

8. Method for adding a food additive of the type comprising the addition to a liquid, wine in particular, of said food additive associated with an effervescent excipient, **characterized in that** a powder is added to said liquid according to claims 1 to 7.

9. Method for adding a food additive to the upper part of a liquid, wine in particular, **characterized in that** a powder according to claim 5 is added to said liquid.

10. Method for adding a food additive to the lower part of a liquid, wine in particular, **characterized in that** a powder according to claim 6 is added to said liquid.

11. Method for adding a food additive to the total volume of a liquid, wine in particular, **characterized in that** a powder according to claim 7 is added to said liquid.
